# EUROPÄISCHE PATENTSCHRIFT

(11) **EP 1 818 202 B1**
(45) Veröffentlichungstag und Bekanntmachung des Hinweises auf die Patenterteilung: **18.12.2013**
(21) Anmeldenummer: 07001363.6
(22) Anmeldetag: 23.01.2007
(51) Int. Cl.: B60J 7/14, B62D 25/04

(54) **B-Säulensegment für ein Cabriolet-Fahrzeug**
B-column segment for a convertible vehicle
Segment de colonne B pour un véhicule cabriolet

(30) Priorität: 10.02.2006 DE 102006006126
(43) Veröffentlichungstag der Anmeldung: 15.08.2007
(73) Patentinhaber: Wilhelm Karmann GmbH, 49084 Osnabrück (DE)
(72) Erfinder: Brockhoff, Franz-Ulrich, 49565 Bramsche (DE)
(74) Vertreter: Kronthaler, Schmidt & Coll.

(56) Entgegenhaltungen:
- WO-A-2005/108191
- DE-A1- 10 230 703
- DE-A1- 10 318 076
- DE-A1-102006 008 290
- DE-B3- 10 353 448
- DE-C1- 4 326 329

## Beschreibung

Die Erfindung betrifft ein Cabriolet-Fahrzeug mit einem B-Säulensegment, insbesondere ein viertüriges Cabriolet-Fahrzeug. Das Dokument DE 10318076 A1 offenbart ein solches Cabridet-Fahrzeug.

Bei viertürigen Cabriolet-Fahrzeugen ist es wünschenswert, bei einem geöffneten Verdeck die Seitenfenster des Fahrzeugs in den Türen zu versenken. Insbesondere sollen möglichst die Fahrzeugscheiben der Seitenfenster vollständig im Türkörper der Vorder- bzw. Hintertür des Fahrzeugs aufgenommen werden können.

Damit diese Bewegung der Scheiben des Fahrzeugs erzeugt werden kann, die meist eine kombinierte translatorische Bewegung (Hoch-Tief-Bewegung) und Drehbewegung (um eine Achse im Wesentlichen senkrecht zur Scheibenebene) ist, ist es bekannt, die B-Säule des Fahrzeugs, d.h. die zwischen den Seitenfenstern liegende Mittelsäule, verhältnismäßig schmal zu gestalten, insbesondere in deren oberen Teil über der Gürtellinie des Kraftwagens, damit diese Bewegung der Fahrzeugseitenscheiben, insbesondere die Drehbewegung, ermöglicht sind.

Solche schmalen B-Säulen können jedoch keine tragende Funktion übernehmen, d.h. sie können nicht zur Aufnahme von Kräften, beispielsweise bei einem Überschlag des Fahrzeugs, beitragen oder eine Dachkonstruktion wesentlich stabilisieren.

Aus der DE 42 41 054 C1 ist eine zusätzliche Mittelsäule für einen Kraftwagen bekannt, die in Höhenrichtung etwa in Höhe der Gürtellinie des Fahrzeugs geteilt ist. Die Säule, welche zusätzlich beispielsweise zu einer über sie überlappenden Seitenscheibe vorgesehen ist, ist im normalen Fahrzeugfahrzustand eingefahren, d.h. der oberhalb der Gürtellinie des Fahrzeugs liegende Teil ist in den unteren Teil eingeschoben, und wird nur bei einem Überschlag oder ähnlichem ausgefahren, so dass dann die Säule zur Versteifung des Dachbereichs des Fahrzeugaufbaus beiträgt. Diese Säule übernimmt nicht alle bei viertürigen Fahrzeugen herkömmlicher Weise von der B-Säule übernommenen Funktionen, wie z.B. Anlenkung der Seitentüren, sondern wird zusätzlich im Innenraum ausgefahren. Außerdem liegt sie nicht zwischen den Seitenfenstern des Fahrzeugs.

Es ist Aufgabe der vorliegenden Erfindung, ein B-Säulensegment für ein Cabriolet-Fahrzeug vorzusehen, das einerseits tragende Funktion, d.h. festigkeitsrelevante Aufgaben, übernehmen kann und andererseits eine gute Abdichtung zu den Seitenfenstern gewährleistet und das Versenken der Seitenfenster des Cabriolet-Fahrzeugs bei geöffnetem Verdeck des Cabriolet-Fahrzeugs nicht behindert. Insbesondere soll das Absenken der Scheiben der Seitenfenster erleichtert werden und ein Toleranzausgleich von Abweichungen der Scheibengröße ermöglicht werden.

Diese Aufgabe wird durch ein B-Säulensegment mit den Merkmalen des Anspruchs 1 gelöst. Bevorzugte Ausführungsformen sind in den abhängigen Ansprüchen angegeben.

Der Erfindung liegt der Gedanke zugrunde, die bei einem viertürigen Cabriolet-Fahrzeug zwischen Vorder- und Hintertür angeordnete B-Säule zusammen mit den Seitenscheiben des Cabriolet-Fahrzeugs absenkbar zu machen. Dadurch wird den Seitenscheiben für ihre kombinierte translatorische und rotatorische Bewegung im Wesentlichen in einer Scheibenebene ausreichend Raum gegeben, wenn der obere Teil der B-Säule abgesenkt ist, so dass die Fahrzeugseitenscheiben gedreht werden können und vollständig in die Seitentüren absenkbar sind. Diese Funktionalität wird aufgrund der Absenkbarkeit im Wesentlichen unabhängig von der Breite des oberen Teils der B-Säule erzielt.

Je nach Bedarf und Gegebenheiten kann die Absenkbewegung des oberen Teils des B-Säulensegments, d.h. eines Teils oberhalb von im Wesentlichen der Gürtellinie des Fahrzeugs, gleichzeitig, kurz vor oder kurz nach der Absenkbewegung der Seitenscheiben beginnen. Dadurch, dass die B-Säule aufgrund ihrer Absenkbarkeit auch im oberen Teil verhältnismäßig breit ausgebildet werden kann, übernimmt sie tragende Funktionen und insbesondere sicherheitsrelevante Funktionen, beispielsweise bei einem Überschlag des Fahrzeugs zur zusätzlichen Abstützung des Daches.

Nach einer bevorzugten Ausführungsform ist der obere Teil des B-Säulensegments dabei in einer Länge ausgebildet, der dem Abschnitt zwischen Seitenfensterunterkante und Dachrahmen des Cabriolet-Fahrzeugs entspricht, d.h. einem Abschnitt oberhalb der Gürtellinie des Fahrzeugs. Nach Bedarf kann dieser Abschnitt auch etwas größer als der untere Teil sein, so dass der obere Teil der B-Säule im unteren Teil der B-Säule vollständig aufgenommen werden kann. Dies ermöglicht es, dass im geöffneten Zustand des Verdecks des Cabriolet-Fahrzeugs der obere Teil der B-Säule nicht sichtbar ist.

Nachfolgend wird die Erfindung beispielhaft anhand der beigefügten Figuren beschrieben, in denen:
- Fig. 1: ein Cabriolet-Fahrzeug mit einem erfindungsgemäßen B-Säulensegment mit geschlossenem Verdeck ist;
- Fig. 2: das Cabriolet-Fahrzeug aus Fig. 1 bei offenem Verdeck zeigt;
- Fig. 3 bis 7: die Absenkbewegung des oberen Teils des B-Säulensegments und der Seitenfensterscheiben in verschiedenen Öffnungszuständen zeigt; und
- Fig. 8: eine Querschnittsansicht in Draufsicht auf den Bereich der B-Säule des Cabriolet-Fahrzeugs ist.

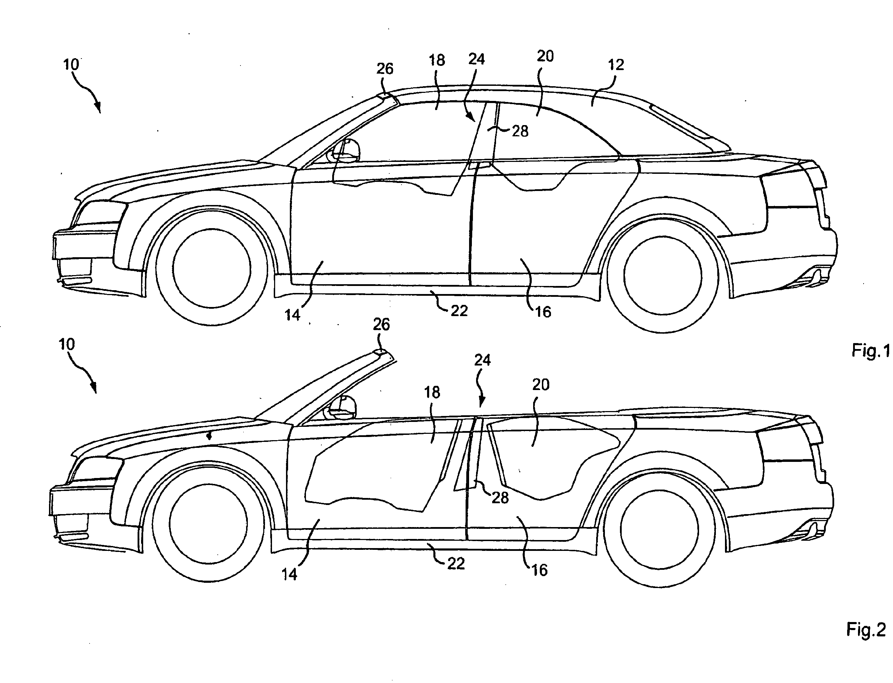

Fig. 1 zeigt ein Cabriolet-Fahrzeug 10 mit geschlossenem Verdeck 12. Das Cabriolet-Fahrzeug 10 ist viertürig und weist eine vordere Seitentür 14 und eine hintere Seitentür 16 auf. Selbstverständlich sind auf der gegenüberliegenden, in Fig. 1 und 2 nicht erkennbaren Seite, ebenfalls eine Vordertür 14 und eine Hintertür 16 angebracht, so dass auf der gegenüberliegenden Seite die Konstruktion im Wesentlichen identisch zur beschriebenen, in Fig. 1 sichtbaren Seite ist. Die hintere Seitentür 16 ist mit einem hinteren Seitenfenster 20 versehen, während die vordere Seitentür 14 mit einem vorderen Seitenfenster 18 versehen ist.

Eine B-Säule des Cabriolet-Fahrzeugs 10 erstreckt sich zwischen der vorderen Seitentür 14 und der hinteren Seitentür 16 zwischen einem Fahrzeugboden 22 und der das Verdeck 12 tragenden Dachstruktur. Das B-Säulensegment 24 bildet dabei sowohl Anlenkstellen für die hintere Seitentür 16 als auch die Verbindung zwischen dem vorderen Seitenfenster 18 und dem hinteren Seitenfenster 20 im geschlossenen Zustand des Verdecks 12 bzw. bei hochgefahrenen, d.h. geschlossenen, Fenstern.

Fig. 2 zeigt das Cabriolet-Fahrzeug aus Fig. 1 mit geöffnetem Verdeck 12 und geöffneten Seitenfenstern 18, 20. Das Verdeck 12, d.h. der Dachbereich zwischen dem Windschutzscheibenrahmen 26 und dem Heckbereich des Fahrzeugs ist im Heckbereich des Fahrzeugs abgelegt. Wie zu erkennen ist, sind sowohl das vordere Seitenfenster 18 als auch das hintere Seitenfenster 20 vollständig innerhalb der vorderen Tür 14 bzw. der hinteren Tür 16 aufgenommen, so dass sie über die Gürtellinie des Cabriolet-Fahrzeugs 10 nicht nach oben vorstehen. Außerdem ist ein oberer Teil 28 der B-Säule 24 in einen unteren Teil 30 (in Fig. 2 nicht dargestellt) der B-Säule 24 eingefahren, so dass er ebenfalls nicht über die Gürtellinie des Fahrzeugs nach oben hinausragt.

Aus einem Vergleich zwischen Fig. 1 und 2, insbesondere der Lage des hinteren Seitenfensters 20, ist zu entnehmen, dass das hintere Seitenfenster in seiner Scheibenebene gegen den Uhrzeigersinn bezüglich der Ausgangsposition bei geschlossenem Fenster (Fig. 1) verdreht ist, um in der Fahrzeughintertür 16 Platz zu finden. In ähnlicher Weise kann das vordere Seitenfenster 18 im Uhrzeigersinn verdreht werden, wenn das Fahrzeugseitenfenster 18 abgesenkt wird, um in der Vordertür 14 Platz zu finden. Da jedoch dort das Platzangebot tendenziell größer als im Bereich der Hintertür ist, ist eine Verdrehung in der Scheibenebene oftmals nicht erforderlich, so dass eine translatorische Absenkbewegung genügt.

Um die Bewegungen der Seitenfenster 18, 20 zwischen der in Fig. 1 gezeigten geschlossenen Stellung und der in Fig. 2 gezeigten offenen Stellung zu ermöglichen, ist es erforderlich, dass im Bereich des oberen Teils der B-Säule, d.h. des Teils 28 der B-Säule 24, die B-Säule 24 die Drehbewegung nicht behindert bzw. dieser ausweicht.

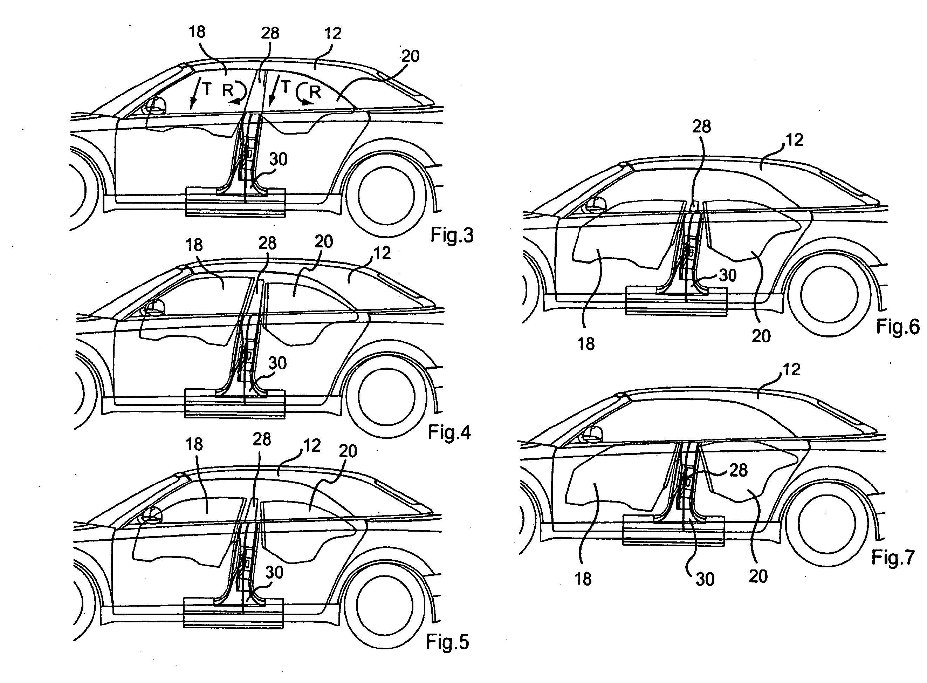

Wie Fig. 3 bis 7, welche die Öffnungsbewegung der Seitenfenster 18, 20 und ihr Ablegen in den Seitentüren 14, 16 zeigen, entnehmbar ist, wird dazu erfindungsgemäß eine zu der Bewegung der Seitenfenster 18, 20 synchrone Absenkbewegung (bzw. beim Schließen Hebebewegung) des oberen Teils 28 der B-Säule 24 ausgeführt, so dass der obere Teil 28 der B-Säule 24 in den unteren Teil 30 der B-Säule 24 aufgenommen wird. Dadurch, dass diese aufeinander abgestimmte Bewegung zwischen Seitenfenstern 18, 20 und oberem Teil 28 der B-Säule 24 erfolgt, kann die B-Säule 24 verhältnismäßig groß und ohne Einschränkungen bezüglich ihrer Festigkeit und Lastaufnahmefähigkeit ausgebildet werden, so dass sie dazu beitragen kann, auf beispielsweise das Dach einwirkende Kräfte aufzunehmen und somit das Dach abzustützen. In Fig. 3 bis 7 ist mit T die Richtung der translatorischen Bewegung beim Öffnen der Fahrzeugseitenfenster und mit R die Richtung der rotatorischen Bewegung beim Öffnen angegeben. Beim Schließen sind die Richtungen jeweils umgekehrt.

Die Öffnungsbewegung der Seitenfenster 18, 20 kann selbstverständlich auch bei geschlossenem Verdeck 12 erfolgen. Vorteilhaft ist dabei, wenn das vordere Seitenfenster 18 eine reine translatorische Bewegung ausführt, und somit ohne Absenken des oberen Teils 28 der B-Säule 24 in dem Körper der vorderen Seitentür 14 aufnehmbar ist, so dass bei einer Öffnung von ausschließlich dem vorderen Seitenfenster 18 der obere Teil 28 der B-Säule 24 in der geschlossenen Position (Fig. 1) verbleiben kann. Gleichzeitig kann, da für das Seitenfenster 20 eine rotatorische Bewegung des Fensters in seiner Scheibenebene erforderlich ist, die Bewegung des oberen Teils 28 der B-Säule 24 an die Bewegung des hinteren Seitenfensters 20 gekoppelt sein.

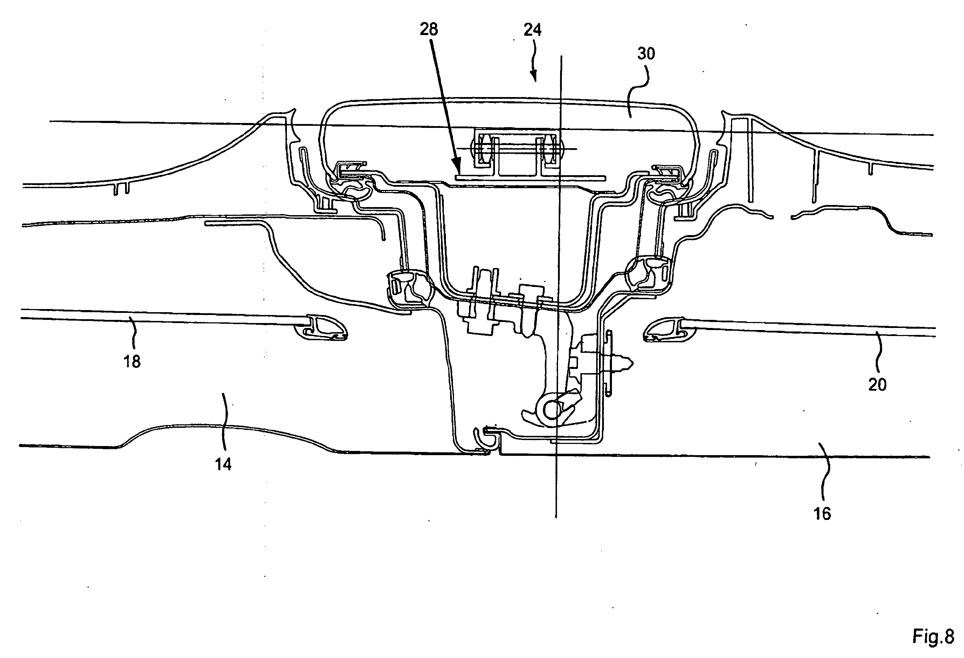

Fig. 8 zeigt schließlich in einer Querschnittsansicht, wie der obere Teil 28 der B-Säule 24 in den unteren Teil 30 der B-Säule 24 aufgenommen ist.

### BEZUGSZEICHENLISTE

- 10: Cabriolet-Fahrzeug
- 12: Verdeck
- 14: vordere Seitentür
- 16: hintere Seitentür
- 18: vorderes Seitenfenster
- 20: hinteres Seitenfenster
- 22: Fahrzeugboden
- 24: B-Säulensegment
- 26: Windschutzscheibenrahmen
- 28: oberer Teil
- 30: unterer Teil

## Patentansprüche

1. Cabriolet-Fahrzeug (10) mit einem B-Säulensegment (24), enthaltend einen stationären unteren Teil (30) und einen relativ zu dem stationären Teil (30) verschiebbaren oberen Teil (28), wobei der obere Teil (28) in den unteren Teil (30) bei zumindest einem geöffneten seiten fenster (18, 20) des Cabriolet-Fahrzeugs (10) einschiebbar ist und das B-Säulensegment (24) gebildet aus dem unteren und dem oberen Teil (30, 28) tragende Funktion hat, **dadurch gekennzeichnet,**
**dass** im nicht abgesenkten Zustand der obere Teil (28) des B-Säulensegments (24) zwischen Seitenfenstern (18, 20) des Cabriolet-Fahrzeugs (10) liegt und das vordere und/oder hintere Seitenfenster (18, 20) durch eine kombinierte translatorische Bewegung und Drehbewegung in einer Fensterscheibenebene in den Türen (14, 16) des Cabriolet-Fahrzeugs (10) versenkbar sind, wobei die Absenk- bzw. Hebebewegung des oberen Teils (28) des B-Säulensegments (24) synchron zur Absenk- bzw. Hebebewegung von zumindest einem der Seitenfenster (18, 20) erfolgt.

2. Cabriolet-Fahrzeug (10) nach Anspruch 1,
**dadurch gekennzeichnet,**
**dass** der obere Teil (28) eine Länge aufweist, welche dem Abschnitt zwischen Seitenfensterunterkante und Dachrahmen des Cabriolet-Fahrzeugs (10) entspricht.

3. Cabriolet-Fahrzeug (10) nach Anspruch 1 oder 2,
**dadurch gekennzeichnet,**
**dass** der obere Teil vollständig in den unteren Teil einschiebbar ist.

## Claims

1. A convertible vehicle (10) with a B-pillar segment (24), including a stationary lower part (30) and an upper part (28) displaceable with respect to the stationary part (30), wherein the upper part (28) is insertable into the lower part (30) when at least one side window (18, 20) of the convertible vehicle (10) is opened, and the B-pillar segment (24) formed by said lower and upper parts (30, 28) has a supporting function,
**characterised in that**,
when it is not in its lowered state, the upper part (28) of the B-pillar segment (24) is arranged between side windows (18, 20) of the convertible vehicle (10) and the front and/or rear side window (18, 20) can be lowered into the doors (14, 16) of the convertible vehicle (10) by a combined translational movement and rotational movement in the plane of a window pane, the lowering and/or lifting movement of the upper part (28) of the B-pillar segment (24) being synchronized with the lowering and/or lifting movement, respectively, of at least one of the side windows (18, 20).

2. The convertible vehicle (10) according to claim 1, **characterised in that** the upper part (28) has a length which corresponds to the portion between the lower edge of the side window and the roof frame of the convertible vehicle (10).

3. The convertible vehicle (10) according to claim 1 or 2, **characterised in that** the upper part is completely insertable in the lower part.

## Revendications

1. Véhicule cabriolet (10), comprenant un segment de montant B (24) qui présente une partie inférieure stationnaire (30) et une partie supérieure (28), déplaçable par rapport à la partie stationnaire (30), la partie supérieure (28) étant insérable dans la partie inférieure (30) lorsqu'au moins une fenêtre latérale (18, 20) du véhicule cabriolet (10) est ouverte, et le segment de montant B (24), constitué par lesdites parties inférieure et supérieure (30, 28), ayant une fonction de support,
**caractérisé en ce que**,
quand elle n'est pas dans son état abaissé, la partie supérieure (28) du segment de montant B (24) est disposée entre des fenêtres latérales (18, 20) du véhicule cabriolet (10) et la fenêtre latérale (18, 20) avant et/ou arrière est escamotable dans les portes (14, 16) du véhicule cabriolet (10) en combinant un mouvement translatoire avec un mouvement rotatif dans le plan d'une vitre, l'abaissement et/ou le levage de la partie supérieure (28) du segment de montant B (24) étant synchronisé respectivement avec l'abaissement et/ou le levage d'au moins une des fenêtres latérales (18, 20).

2. Véhicule cabriolet (10) selon la revendication 1, **caractérisé en ce que** la partie supérieure (28) présente une longueur qui correspond à la section entre le bord inférieur de la fenêtre latérale et le cadre de toit du véhicule cabriolet (10).

3. Véhicule cabriolet (10) selon la revendication 1 ou 2, **caractérisé en ce que** la partie supérieure est complètement insérable dans la partie inférieure.
